# EUROPÄISCHE PATENTANMELDUNG

(11) **EP 1 309 055 A1**
(43) Veröffentlichungstag der Anmeldung: **07.05.2003**
(21) Anmeldenummer: 01440372.9
(22) Anmeldetag: 02.11.2001
(51) Int. Cl.: H02G 1/08, H02G 9/06, G02B 6/50, G02B 6/44

(54) **Kabel für die Verlegung in Kunststoffrohren**

(71) Anmelder: ALCATEL, 75008 Paris (FR)
(72) Erfinder: Nothofer, Klaus, 40699 Erkrath (DE); Leppert, Hans-detlef, 41189 Mönchengladbach (DE)
(74) Vertreter: Rausch, Gabriele, Dr.

(57) **Zusammenfassung**

Es wird ein Kabel für die Verlegung in Kunststoffrohren (4) für den Transport von Gas oder Wasser beschrieben, bestehend aus einer Kabelseele (1) sowie einem die Kabelseele (1) umhüllenden Mantel (2) aus Kunststoff, bei dem der für das Kunststoffrohr (4) verwendete Kunststoff und der Kunststoff für den Mantel (2) miteinander verschweißbar sind.

## Beschreibung

Die Erfindung betrifft ein Kabel für die Verlegung in Kunststoffrohren für den Transport von Gas oder Wasser nach dem Oberbegriff des Anspruchs 1 sowie ein Verfahren zur Verlegung eines Kabels in einem aus Kunststoff bestehenden Rohr zur Fortleitung von Gas oder Wasser nach dem Oberbegriff des Anspruchs 7.

Im Zuge der Errichtung neuer Kabelanlagen für die Telekommunikation durch regionale und kommunale Unternehmen wird in zunehmendem Maße aus wirtschaftlichen und/oder organisatorischen Gründen über Alternativlösungen zur herkömmlichen Verlegung von Telekommunikationskabeln unmittelbar im Erdreich nachgedacht. Eine sich insbesondere aus wirtschaftlichen Gründen anbietende alternative Verlegetechnik für Telekommunikationskabel ist die Nutzung von im Rohr- bzw. Kanalnetz eines Versorgungssystems einer Stadt oder einer Ortschaft vorhandenen Gas- und Wasserleitungen. Eine solche Lösung ist in der DE 30 01 226 A1 beschrieben. Neben der Reduzierung der Kosten zum Aufbau eines städtischen oder regionalen Telekommunikationsnetzes sind durch die Nutzung der vorhandenen Leitungen nur in geringem Umfang Erdarbeiten erforderlich, so daß der insbesondere in Städten oft enge Verkehrsraum wenig beeinträchtigt wird. Zudem stellt bei dieser neuen Verlegetechnik die in vielen Fällen bereits dichte Trassenbelegung mit Leitungen aller Ver- und Entsorgungssparten kein wesentliches Problem dar, sondern kann sogar von Vorteil sein.

Zum Aufbau eines Telekommunikationsnetzes unter Verwendung von einen vergleichweise kleinen Außendurchmesser aufweisenden optischen Kabeln einschließlich der Anbindungsmöglichkeit für später zuzuschaltende Teilnehmer bietet sich daher aus technischen und organisatorischen Gründen sowie aus Gründen des Wegerechts die Verlegung von optischen Nachrichtenkabeln z. B. in Frischwasserleitungen des vorhandenen Versorgungsnetzes an. Dabei ist beim Einführen des Kabels in die Leitung durch besondere Sorgfalt dafür zu sorgen, daß in der Leitung keine Verkeimung oder andere mikrobiologische Verunreinigungen auftreten.

Eine zusätzliche Schwierigkeit bei der Verlegung von Kabeln in Trinkwasserleitungen besteht darin, daß in Trinkwasserleitungen in Abständen von etwa 150 bis 250 m Schieber oder andere Absperrvorrichtungen zum Absperren der Frischwasserleitung angeordnet sind. An diesen Absperrstellen muß das Kabel ohne irgendwelche Beeinträchtigungen mechanischer oder optischer Art um den Schieber herumgeführt werden, indem das Kabel vor dem Schieber aus der rohrförmigen Leitung herausgeführt und hinter dem Schieber wieder in die rohrförmige Leitung eingeführt wird. Zudem ist es auch für die Erstellung von Teitnehmeranschlüssen oder Abzweigen erforderlich, ein optisches Kabel aus der rohrförmigen Leitung heraus oder in die rohrförmige Leitung hinein zu führen.

Aus der DE 297 22 107 U ist eine Vorrichtung zum Einführen und/oder Herausführen eines Kabels in eine bzw. aus einer rohrförmigen Leitung bekannt, wobei an der Leitung ein flanschartiges Gehäuse befestigt ist. Das Kabel ist gegenüber dem Gehäuse durch ringförmige Dichtelemente abgedichtet ist. Die innere Bohrung der Dichtelemente ist so bemessen, daß das Kabel leichtgängig hindurchgeführt werden kann. Die Abdichtung erfolgt durch axiales Verspannen der Dichtelemente, wobei sich diese sowohl an das Kabel als auch an die Innenwand des Gehäuses anpressen. Die Dichtelemente bestehen demgemäß aus einem elastischen Material z. B. Gummi.

Diese Art der Abdichtung ist für Drücke bis zu 15 bar geeignet, bei höheren Drücken ist die erforderliche Sicherheit nicht mehr gegeben. Darüberhinaus muß befürchtet werden, daß bei einer Leitung für den Gastransport das Gas durch die Dichtelemente hindurchdiffundieren kann.

Diese Art des Herein- und Herausführens von Kabeln hat sich bewährt, ist jedoch recht kostenaufwendig.

Der vorliegenden Erfindung liegt die Aufgabe zugrunde, ein Kabel bereitzustellen, welches in Rohre aus Kunststoff, welche zum Transport von Gas oder Wasser verwendet werden, herein- und herausgeführt werden kann. Dadurch soll es möglich werden, die bekannten Verlegeverfahren kostengünstiger zu gestalten.

Diese Aufgabe wird durch das im Kennzeichen der Ansprüche 1 und 7 Erfaßte gelöst.

Weitere vorteilhafte Ausgestaltungen sind in den Unteransprüchen erfaßt.

Der wesentliche Vorteil der Erfindung ist darin zu sehen, daß in einfacher Weise ein Kabel zur Übertragung von Information in ein Kunststoffrohr so eingeführt und herausgeführt werden kann, daß der Ort der Einführung und der Herausführung sicher und dauerhaft nach außen abgedichtet ist.

Die Erfindung ist insbesondere anwendbar in Gas- und Trinkwasserverteilungsnetzen. Die für diesen Zweck verwendeten Rohre bestehen meistens aus Metall jedoch werden zunehmend Rohre aus HDPE (PE 100 und PE 80) eingesetzt.

Für den Fall, daß das Kunststoffmaterial für den Mantel zu hart ist und dadurch die Flexibilität des Kabels leiden würde, hat es sich in Weiterbildung der Erfindung als vorteilhaft erwiesen, den Mantel aus zwei Schichten aufzubauen, wobei die innere Schicht eher weich ist z. B. aus LDPE besteht und die äußere Schicht mit dem Kunststoffrohr verschweißbar ist z. B. aus HDPE besteht. Auch kann es von Vorteil sein, als Mantelmaterial LLDPE zu nehmen, da dieser Werkstoff gut biegbar ist und einen Schmelzpunkt hat, der in der Nähe des Schmelzpunktes von HDPE liegt.

Um die Verschweißbarkeit des Kabels zu verbessern, ist es von Vorteil, daß der Mantel bzw. die äußere Schicht koronabehandelt ist.

Die Verschweißung des Kabelmantels mit der Bohrung bzw. mit dem Rohrstutzen erfolgt durch das bei Kunststoffrohren für den Transport von Gas oder Wasser schon verwendeten Heizspiegelschweißverfahren.

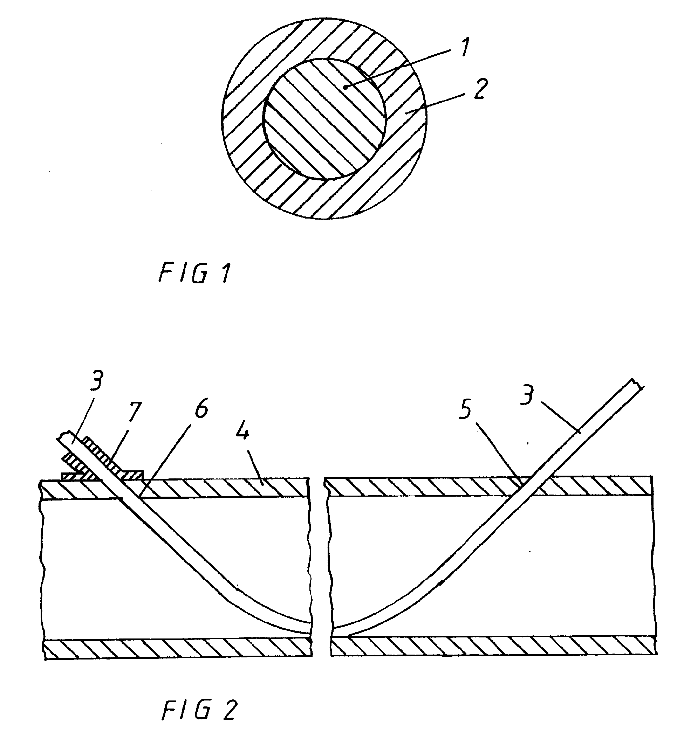

Die Erfindung ist anhand der in den Figuren 1 und 2 schematisch dargestellten Ausführungsbeispiele näher erläutert.

In der Figur 1 ist ein Schnitt durch ein Kabel nach der Lehre der Erfindung dargestellt, worin mit 1 die Kabelseele z. B. eine Vielzahl von Lichtwellenleitern und mit 2 der Kabelmantel bezeichnet ist, der mit einem Kunststoffrohr verschweißbar sein soll.

Für den Fall, daß das Kabel durch die Wandung eines für den Transport von Gas oder Wasser Rohres aus HDPE hindurchgeführt werden soll, besteht der Mantel 2 ebenfalls aus HDPE oder LLDPE, wobei LLDPE der Vorzug eingeräumt werden sollte, da HDPE als Werkstoff für den Mantel 2 wegen seiner Steifigkeit weniger geeignet ist. Um die Verschweißbarkeit des Mantels mit dem Kunststoffrohr zu verbessern, ist die Oberfläche des Mantels 2 koronabehandelt.

In der Figur 2 ist ein Schnitt durch ein Kunststoffrohr dargestellt, in welches Kabel ein herein- bzw. herausgeführt sind.

In der rechten Hälfte der Figur 2 ist in die Wandung des Kunststoffrohres 4 eine Bohrung 5 schräg zur Längsrichtung des Kunststoffrohres 4 eingebracht, durch welche das Kabel 3 in das Innere des Kunststoffrohres 4 eingeführt ist. Nach dem Einziehen des Kabels 3 wird der Mantel 2 des Kabels 3 mit der Innenwandung der Bohrung 5 durch Hitzeanwendung z. B. mittels eines nicht dargestellten Heizkeiles verschweißt.

In der linken Hälfte der Figur 2 ist als Alternativlösung im Bereich einer zweiten Bohrung 6 ein Rohrstutzen 7 mit der Wandung des Kunststoffrohres 4 verschweißt, wobei die Bohrung des Rohrstutzens 7 mit der zweiten Bohrung 6 fluchtet. Das Kabel 3 kann durch die zweite Bohrung 6 und den Rohrstutzen 7 aus dem Kunststoffrohr 4 herausgeführt werden. Abschließend wird der Mantel 2 des Kabels 3 mit dem Rohrstutzen 7, der aus dem gleichen Kunststoff wie das Kunststoffrohr besteht, verschweißt.

Derartige Rohrstutzen sind als sogenannte Anbohrstutzen bekannt und werden vor dem Anbohren der Wandung des Kunststoffrohres auf dieses aufgeschweißt und anschließend die Bohrung erzeugt, indem ein Bohrer durch die innere Öffnung des Rohrstutzens hindurchgeführt wird und die Bohrung in der Rohrwandung erzeugt.

Wesentlich für die Erfindung ist, daß der Innendurchmesser der Bohrung 5 bzw. auch die Bohrung 6 des Rohrstutzens 7 annähernd gleich dem Außendurchmesser des Kabels 3 ist.

## Patentansprüche

1. Kabel für die Verlegung in Kunststoffrohren (4) für den Transport von Gas oder Wasser, bestehend aus einer Kabelseele (1) sowie einem die Kabelseele (1) umhüllenden Mantel (2) aus Kunststoff, **dadurch gekennzeichnet, daß** der für das Kunststoffrohr (4) verwendete Kunststoff und der Kunststoff für den Mantel (2) miteinander verschweißbar sind.

2. Kabel nach Anspruch 1, **dadurch gekennzeichnet, daß** der Kunststoff sowohl für das Rohr (4) als auch für den Mantel (2) Polyethylen, vorzugsweise HDPE ist.

3. Kabel nach Anspruch 1 oder 2, **dadurch gekennzeichnet, daß** die Differenz zwischen dem Schmelzpunkt des Kunststoffes für das Rohr (4) und dem Schmelzpunkt des Kunststoffes für den Mantel (2) weniger als 10 °C beträgt.

4. Kabel nach einem der Ansprüche 1 bis 3, **dadurch gekennzeichnet, daß** der Mantel (2) aus zwei Schichten besteht, von denen die innere weich ist und die äußere Schicht mit dem Kunststoffrohr verschweißbar ist.

5. Kabel nach einem der Ansprüche 1 bis 4, **dadurch gekennzeichnet, daß** der Mantel (2) des Kabels (3) koronabehandelt ist.

6. Kabel nach einem der Ansprüche 1 bis 5, **dadurch gekennzeichnet, daß** die Kabelseele (1) Lichtwellenleiter enthält.

7. Kabel nach einem der Ansprüche 1 bis 6, **dadurch gekennzeichnet, daß** zwischen der Kabelseele (1) und dem Mantel (2) bzw. innerhalb des Mantels (2) eine metallische Lage vorgesehen ist.

8. Verfahren zur Verlegung eines Kabels zur Übertragung von Informationen in einem aus Kunststoff bestehenden Rohr zur Fortleitung flüssiger oder gasförmiger Medien, **dadurch gekennzeichnet, daß**
a) in die Wandung des Kunststoffrohres eine Bohrung eingebracht wird,
b) ein Kabel mit einer Kabelseele und einem Kunststoffmantel durch die Bohrung hindurchgeführt wird,
c) das Kabel mittels eines Zugseils oder mittels Fluiddruck in das Kunststoffrohr eingebracht wird und
d) abschließend der Kunststoffmantel des Kabels mit der Bohrung verschweißt wird.

9. Verfahren nach Anspruch 8, **dadurch gekennzeichnet, daß** im Bereich der Bohrung ein Rohrstutzen aus Kunststoff an das Rohr aus Kunststoff angeschweißt und der Kabelmantel nach dem Einziehen des Kabels in das Rohr mit dem Rohrstutzen verschweißt wird.

10. Verfahren nach Anspruch 8 oder 9, **dadurch gekennzeichnet, daß** die Bohrung bzw. der Rohrstutzen unter einem Winkel von 30 bis 60° zur Längsachse des Kunststoffrohres angebracht wird.
